# EUROPEAN PATENT APPLICATION

(11) **EP 3 562 099 A1**
(43) Date of publication of application: **30.10.2019**
(21) Application number: 17884301.7
(22) Date of filing: 15.12.2017
(51) Int. Cl.: H04L 12/28

(54) **SCHEDULING METHOD, SYSTEM, CONTROLLER AND COMPUTER STORAGE MEDIUM**

(30) Priority: 20.12.2016 CN 201611186169
(71) Applicant: ZTE Corporation, Shenzhen, Guangdong 518057 (CN)
(72) Inventor: LIU, Cangming, Shenzhen Guangdong 518057 (CN)
(74) Representative: Regimbeau
(86) International application number: PCT/CN2017/116387
(87) International publication number: WO 2018/113591

(57) **Abstract**

Disclosed by the embodiments of the present application are a scheduling method, system, controller and computer storage medium. The method includes: a controller authenticating a user equipment according to a received access protocol message of the user equipment, and obtaining authorization information of the user equipment after authentication succeeds; and the controller selecting a first transponder to serve as an access device of the user according to the authorization information of the user equipment, the first transponder being a pre-configured physical transponder or virtual transponder, and the first transponder being used for forwarding a data message.

## Description

### CROSS-REFERENCE TO RELATED APPLICATION

The present application is based on and claims benefit of Chinese Patent Application No. 201611186169.6, filed on December 20, 2016, the contents of which are hereby incorporated by reference in its entirety.

### TECHNICAL FIELD

The present invention relates to communication technology, and in particular, to a scheduling method and system, a controller, and a computer storage medium.

### BACKGROUND

With the development of broadband metropolitan area network and broadband Internet Protocol, called IP, services, it is no longer possible to simply adopt a management method without authentication for users to access the Internet. As a broadband access device, a broadband access server, called BAS, can intelligently implement services such as authentication, authorization and accounting for users, and can conveniently provide multiple IP value-added services according to user needs. The BAS can complete data access of broadband IP users and realize the broadband IP Internet access for commercial buildings and community residents. The BAS is located at the edge of a network, provides broadband access services, and achieves aggregation and forwarding of multiple services. The requirements of different users for a transmission capacity and bandwidth utilization can be satisfied. Therefore, the BAS is a core device for broadband users to access.

With the continuous development of various application technologies, users have not satisfied with the services such as simple Internet surfing or file transfer protocol, called FTP, download, but expect to obtain a better multimedia experience, such as high speed internet, called HSI, 4K ultra high definition internet protocol television, called IPTV, video chat, real-time games and other services. Operators are eager to generate more value by providing differentiated and rich services. This requires a broadband access network to have a processing capability of hierarchical quality of service, called QoS, to achieve QoS policies for each user, each service, each application, and each port, and to have a powerful processing capability of access control list, called ACL, to achieve flexible scheduling and service management for a network bandwidth. The broadband access network is usually a two-layer network, and is generally constructed by using a digital subscriber line access multiplexer, called DSLAM, a two-layer Ethernet switch, an optical network unit, called ONU, and an optical line terminal, called OLT. These devices can only perform forwarding according to two-layer information of messages. The processing capability for QoS is weak. For example, simple priority scheduling can only be performed according to a class of service, called COS, domain of a virtual local area network, called VLAN, and the requirements of services for hierarchical QoS cannot be satisfied. In order to be able to carry services having different QoS requirements on the broadband access network, a hierarchical QoS mechanism is required to be deployed on a broadband access device, thereby reducing the QoS performance requirements of devices below an access gateway, reducing the cost of an access network, and simplifying the management of QoS.

With the development of a network functions virtualization, called NFV, technology, a private dedicated network device in a communication network is gradually replaced by an X86 server, a storage device and a switching device based on industry standards, thereby saving huge investment costs for operators and obtaining more flexible network capabilities. The broadband access device is no exception, and can be virtualized by the NFV technology and run on a general-purpose X86 server. The broadband access device is only necessary to occupy a virtual memory, computing and storage resources. Compared with a conventional broadband access device, the investment cost is greatly saved.

The processing performance of a central processing unit, called CPU, of the general-purpose X86 servers is far from the processing performance of a network processor, called NP, used in a dedicated network device or an application specific integrated circuit, called ASIC, chip used in a dedicated network device. In particular, the performance is very low in terms of hierarchical QoS, ACL, and multicast message replication processing. Therefore, after the broadband access device is virtualized, the performance requirements of high bandwidth and high QoS services cannot be satisfied.

Therefore, there is currently no effective solution in the related art for how to satisfy the session requirements of different services and improve the access capability of a forwarder.

### SUMMARY

Embodiments of the present invention are directed to a scheduling method and system, a controller, and a computer storage medium.

The embodiments of the present invention provide a scheduling method. The method includes the following operations.

A controller authenticates a user equipment according to a received access protocol message of the user equipment, and obtains authorization information of the user equipment after authentication is passed; and
the controller selects a first forwarder as an access device of the user equipment according to the authorization information of the user equipment, where the first forwarder is a pre-configured physical forwarder or virtual forwarder, and the first forwarder is configured to forward a data message.

In one embodiment, the operation that the controller authenticates the user equipment according to the received access protocol message of the user equipment may include the following operations.

Based on that a physical forwarder or a virtual forwarder receives an access protocol message of the user equipment, the controller receives the access protocol message of the user equipment sent by the physical forwarder or the virtual forwarder, and authenticates the user equipment according to the access protocol message.

In one embodiment, the access protocol message may include: a point to point protocol over Ethernet, called PPPoE, message, a dynamic host configuration protocol, called DHCP, message, an address resolution protocol, called ARP, message, an Internet group management protocol, called IGMP, message, an 802.1x protocol message, a message under a web authentication mode, or a neighbor discovery protocol, called NDP, message.

In one embodiment, the method may further include that the following operation. The controller issues a flow table to the first forwarder to control a forwarding behavior of the first forwarder.

The embodiments of the present invention also provide a scheduling system. The scheduling system may include a user equipment, a controller, a physical forwarder, and a virtual forwarder.

The controller is configured to authenticate a user equipment according to a received access protocol message of the user equipment, obtain authorization information of the user equipment after authentication is passed, and select a first forwarder as an access device of the user equipment according to the authorization information of the user equipment, where the first forwarder is the pre-configured physical forwarder or virtual forwarder, and the first forwarder is configured to forward a data message.

In one embodiment, the physical forwarder or the virtual forwarder may be further configured to receive an access protocol message of the user equipment and send the access protocol message to the controller.

The controller may be configured to receive the access protocol message of the user equipment sent by the physical forwarder or the virtual forwarder, and authenticate the user equipment according to the access protocol message.

In one embodiment, the access protocol message may include: a PPPoE message, a DHCP message, an ARP message, an IGMP message, an 802.1x protocol message, a message under a web authentication mode, or an NDP message.

In one embodiment, the user equipment may include: a residential gateway, called RG, a customer premise equipment, called CPE, a personal computer, called PC, a voice over Internet protocol, called VoIP, an IPTV, a set top box, called STB, or an integrated access device, called IAD.

In one embodiment, the physical forwarder may include: a broadband remote access server, called BRAS, a broadband network gateway, called BNG, a broadband service gateway, called BSG, a service router, called SR, a BAS, an OpenFlow logical switch, called OFLS, an openFlow switch, called OFS, an access controller, called AC, an OLT, or an aggregation switch.

In one embodiment, the controller may be further configured to issue a flow table to the first forwarder to control a forwarding behavior of the first forwarder; and
the physical forwarder or virtual forwarder, as the first forwarder, may be configured to access a data message of the user equipment based on the flow table.

The embodiments of the present invention also provide a controller. The controller may include a communication unit and a data processing unit.

The communication unit is configured to receive an access protocol message of a user equipment.

The data processing unit is configured to authenticate the user equipment, and obtain authorization information of the user equipment after authentication is passed; and the data processing unit is also configured to select a first forwarder as an access device of the user equipment according to the authorization information of the user equipment, where the first forwarder is a pre-configured physical forwarder or virtual forwarder, and the first forwarder is configured to forward a data message.

In one embodiment, the communication unit may be configured to, based on that a physical forwarder or a virtual forwarder receives an access protocol message of the user equipment, receive the access protocol message of the user equipment sent by the physical forwarder or the virtual forwarder, and authenticate the user equipment according to the access protocol message.

In one embodiment, the communication unit may be further configured to issue a flow table to the first forwarder to control a forwarding behavior of the first forwarder.

The embodiments of the present invention also provide a computer storage medium, having a computer executable instruction stored therein. The computer executable instruction may be used to execute the scheduling method according to the embodiments of the present invention.

The embodiments of the present invention also provide a controller. The controller may include a memory, a processor and a computer program that is stored on the memory and runnable on the processor, the program being executed by the processor to implement the operations of the scheduling method according to the embodiments of the present invention.

The embodiments of the invention provide a scheduling method and system, a controller and a computer storage medium. The method includes the following operations. A controller authenticates a user equipment after receiving an access protocol message of the user equipment, and obtains authorization information of the user equipment after authentication is passed; the controller searches for a pre-configured resource scheduling strategy according to the authorization information of the user equipment, and selects a first forwarder as an access device of a user, where the first forwarder is a pre-configured physical forwarder or virtual forwarder; and the controller issues a flow table to the first forwarder, such that the first forwarder accesses a data message of the user equipment based on the flow table. By using the technical solution of the embodiments of the invention, a controller is additionally provided, a physical forwarder and a virtual forwarder form a forwarding pool, and forwarding pool resources are centrally managed and optimized for scheduling, thereby improving the capability of a conventional forwarder to access user. On the other hand, the use of the virtual forwarder also reduces the access cost of broadband access users.

### BRIEF DESCRIPTION OF DRAWINGS

FIG. 1 is a schematic diagram of the architecture of a scheduling system according to an embodiment of the invention.
Fig. 2 is a schematic flowchart of a scheduling method according to an embodiment of the invention.
FIG. 3 is a schematic diagram of a first architecture of a scheduling system according to an embodiment of the invention.
FIG. 4 is a schematic diagram of a second architecture of a scheduling system according to an embodiment of the invention.
FIG. 5 is a schematic diagram of a third architecture of a scheduling system according to an embodiment of the invention.
FIG. 6 is a schematic diagram of a fourth architecture of a scheduling system according to an embodiment of the invention.
FIG. 7 is a schematic flowchart of a first scheduling method of a scheduling system based on a fourth architecture according to an embodiment of the invention.
FIG. 8 is a schematic flowchart of a second scheduling method of a scheduling system based on a fourth architecture according to an embodiment of the invention.
FIG. 9 is a schematic flowchart of a third scheduling method of a scheduling system based on a fourth architecture according to an embodiment of the invention.
FIG. 10 is a schematic flowchart of a fourth scheduling method of a scheduling system based on a fourth architecture according to an embodiment of the invention.
FIG. 11 is a schematic diagram of a composition structure of a controller according to an embodiment of the invention.

### DETAILED DESCRIPTION

In order to provide a more detailed understanding of the features and technical aspects of the embodiments of the invention, the implementation of the embodiments of the present invention will be described in detail below with reference to the accompanying drawings, and the accompanying drawings are for illustrative purposes only and are not intended to limit the embodiments of the invention.

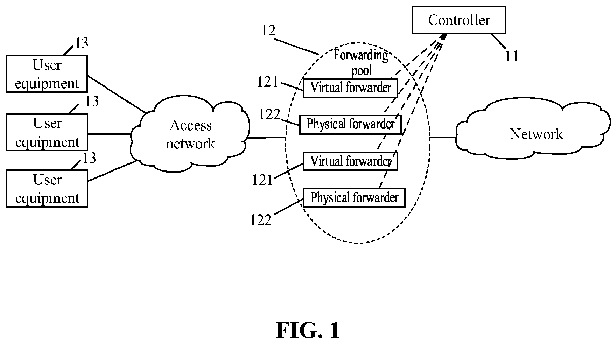

The embodiments of the present invention provide a scheduling system. FIG. 1 is a schematic diagram of the architecture of a scheduling system according to an embodiment of the invention. As illustrated in FIG. 1, the scheduling system includes: a user equipment 13, a controller 11, a physical forwarder 122 and a virtual forwarder 121.

The controller 11 is configured to authenticate the user equipment 13 according to a received access protocol message of the user equipment 13, obtain authorization information of the user equipment 13 after authentication is passed, and select a first forwarder as an access device of the user equipment 13 according to the authorization information of the user equipment 13, where the first forwarder is the pre-configured physical forwarder 122 or virtual forwarder 121, and the first forwarder is configured to forward a data message.

In the present embodiment, the controller 11 is further configured to issue a flow table to the first forwarder.

The physical forwarder 122 or virtual forwarder 121 as the first forwarder is configured to access a data message of the user equipment 13 based on the flow table.

As an implementation manner, the physical forwarder 122 or the virtual forwarder 121 is further configured to receive an access protocol message of the user equipment 13 and send the access protocol message to the controller 11.

The controller 11 is configured to receive the access protocol message of the user equipment 13 sent by the physical forwarder 122 or the virtual forwarder 121, and authenticate the user equipment according to the access protocol message.

In the present embodiment, at least one physical forwarder 122 and at least one virtual forwarder 121 are pre-configured to form a forwarding pool 12. The physical forwarder 122 and the virtual forwarder 121 may be connected by a physical link, and the controller 11 is supported to uniformly schedule forwarder resources in the forwarding pool 12. Specifically, the controller 11 controls forwarding behaviors of all the forwarders (including the physical forwarder 122 and the virtual forwarder 121) in the forwarding pool 12 by issuing a flow table, and uniformly schedules forwarding resources of the forwarding pool 12. The controller 11 centrally manages and controls the resources of the physical forwarder 122 and the virtual forwarder 121 in the forwarding pool 12. In a specific implementation process, the controller 11 may be implemented by starting a virtual controller software on a general-purpose server, that is, the controller 11 may be a virtual controller and used for processing a user access protocol message, completing the authentication and authorization processing of a user, and scheduling user access resources according to authorization information of the user. The virtual forwarder 121 may be implemented by starting virtual forwarder software on a general-purpose server, and simulates a function of the physical forwarder 122 without the support of a dedicated hardware device. The virtual forwarder can satisfy the performance requirements for processing high concurrency, low bandwidth, and weak QoS service. Due to the advantages of low cost and flexible network deployment, compared with a conventional forwarder, it has great advantages in processing services such as VoIP, and TR069 (Technical Report 069, network management protocol defined in Broadband Forum Technical Report 069).

In the present embodiment, the controller 11 authenticates and authorizes an accessed user equipment 13, and selects a forwarder as an access device of the user equipment 13 according to authentication and authorization information and a pre-configured resource scheduling strategy. The selected forwarder may be a physical forwarder 122 or a virtual forwarder 121. The controller 11 uniformly schedules forwarder resources by issuing a flow table to the selected forwarder.

In the present embodiment, the user equipment 13 is a device for a user to connect to and access network resources. The user equipment 13 includes: an RG, a CPE, a PC, a VoIP, an IPTV, an STB or an IAD.

In the present embodiment, the physical forwarder 122 is a high-performance physical device for aggregating user access and forwarding service traffic of a user. The physical forwarder 122 includes: a BRAS, a BNG, a BSG, an SR, a BAS, an OFLS, an OFS, an AC, an OLT, or an aggregation switch.

In the present embodiment, the access protocol message includes: a PPPoE message, a point to point protocol over message, a DHCP message, an ARP message, an IGMP message, an 802.1x protocol message, a message under a web authentication mode, and an NDP message.

By using the technical solution of the embodiments of the invention, a controller is provided additionally, a physical forwarder and a virtual forwarder form a forwarding pool, and forwarding pool resources are centrally managed and optimized for scheduling, thereby improving the capability of a conventional forwarder to access user. In addition, the use of the virtual forwarder also reduces the access cost of broadband access users.

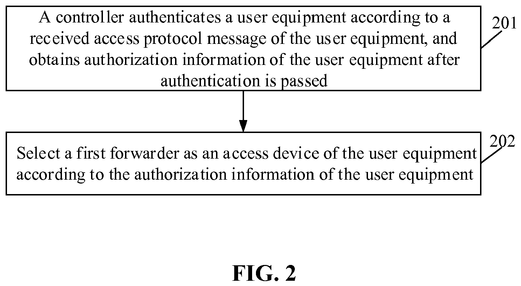

The embodiments of the invention also provide a scheduling method based on the scheduling system illustrated in FIG. 1. FIG. 2 is a schematic flowchart of a scheduling method according to an embodiment of the invention. As illustrated in FIG. 2, the method includes the following operations.

At block 201, a controller authenticates a user equipment according to a received access protocol message of the user equipment, and obtains authorization information of the user equipment after authentication is passed.

At block 202, the controller selects a first forwarder as an access device of the user equipment according to the authorization information of the user equipment, where the first forwarder is a pre-configured physical forwarder or virtual forwarder, and the first forwarder is configured to forward a data message.

As an implementation manner, the operation that a controller authenticates the user equipment according to the received access protocol message of the user equipment includes the following actions. In condition that a physical forwarder or a virtual forwarder receives an access protocol message of the user equipment, the controller receives the access protocol message of the user equipment forwarded by the physical forwarder or the virtual forwarder and authenticates the user equipment according to the access protocol message.

In the present embodiment, after receiving the access protocol message of the user equipment, the controller enters a protocol processing process, and may perform multiple protocol message interactions with the user equipment. The controller authenticates the user equipment according to information carried in the interacted protocol message, and obtains authorization information of the user equipment after authentication is passed.

In the present embodiment, the access protocol message includes a PPPoE message, a DHCP message, an ARP message, an IGMP message, an 802.1x protocol message, a message under a web authentication mode, or an NDP message.

In the present embodiment, after the controller selects a first forwarder as an access device of the user equipment according to the authorization information of the user equipment, the method further includes that: the controller issues a flow table to the first forwarder to control a forwarding behavior of the first forwarder. Specifically, the controller controls the forwarding behaviors of all the forwarders (including the physical forwarder and the virtual forwarder) in a forwarding pool by issuing a flow table, and implements uniform scheduling on forwarding resources in the forwarding pool.

With the technical solution of the embodiments of the invention, a physical forwarder and a virtual forwarder form a forwarding pool by adding a controller, and forwarding pool resources are centrally managed and optimized for scheduling, thereby improving the access user capability of a conventional forwarder. In addition, the use of the virtual forwarder also reduces the access cost of broadband access users.

The scheduling method according to the embodiments of the invention is described in detail below based on different composition structures of the scheduling system and specific application scenarios.

### First scenario

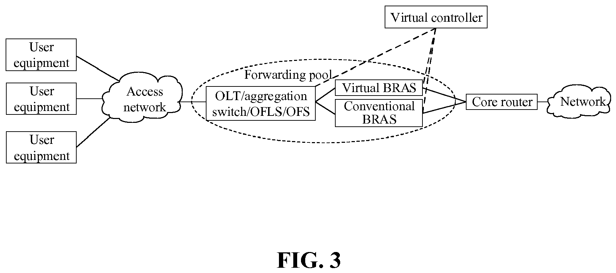

FIG. 3 is a schematic diagram of a first composition structure of a scheduling system according to an embodiment of the invention. As illustrated in FIG. 3, in the present implementation manner, a hardware device part may include a general-purpose server, a BRAS, and one of the following devices: an OLT device, an aggregation switch, an OFLS, or an OFS. The controller in the scheduling system according to the embodiments of the invention may be implemented by starting virtual controller software in the general-purpose server. The virtual forwarder in the scheduling system according to the embodiments of the invention may be implemented by starting virtual forwarder software in the general-purpose server such as a virtual BRAS. The physical forwarder in the scheduling system according to the embodiments of the invention may be implemented by a conventional BRAS, an OLT, an aggregation switch, an OFLS, or an OFS. After building the network structure illustrated in FIG. 3, the virtual controller and virtual forwarder software may be started on the general-purpose server. The BRAS, the virtual forwarder, the OLT or the aggregation switch or the OFLS or the OFS and the virtual controller are further configured to establish an OpenFlow connection.

Based on the composition structure of the above scheduling system, the scheduling method according to the embodiments of the invention may include the following operations.

At step 301, the virtual controller issues a flow table to the OLT, the aggregation switch, the OFLS or the OFS, the flow table defining an access protocol message feature and an action, the access protocol message feature including at least one of the following features: an Ethernet type, an IP protocol number, a Point-to-Point Protocol, called PPP, domain, and the like, and the action including report to the virtual controller.

At step 302, the OLT, the aggregation switch, the OFLS or the OFS receives an access protocol message, extracts a message feature in the protocol message, searches for a flow table through the message feature, and sends the access protocol message to the virtual controller through a Packet_In message defined by an OpenFlow protocol when a matched flow table is found.

At step 303, the virtual controller receives the access protocol message, enters a protocol processing flow, and performs protocol message interaction with a broadband access user through a Packet_Out message defined by the OpenFlow protocol. The virtual controller authenticates the broadband access user based on information carried in the interacted protocol message, the information carried in the protocol message including at least one of the following information: a Media Access Control, called MAC, address, a user name, a domain name, etc. Authorization information of the broadband access user is obtained after authentication is passed.

At step 304, the virtual controller searches for a resource scheduling policy configured on the virtual controller according to the authorization information of the user, including at least one of the following information: an IP address, a user name, a domain name, a Hierarchical Quality of Service, called HQoS, an ACL, or a speed limit bandwidth. The resource scheduling policy includes, for example, a user with a user name (admin) and a domain name (domain), and accessing from a virtual BRAS. The virtual controller selects a forwarder resource in a forwarding pool according to the matched resource scheduling policy, for example, selects a virtual BRAS pointed to in the resource scheduling policy.

At step 305, the virtual controller issues a flow table to the OLT, the aggregation switch, the OFL or the OFS, the flow table defining an output port of a data message of a user, and the flow table including field information such as a MAC address of the user, a session ID, an Ethernet type, an IP protocol number, a PPP protocol domain, and an output port.

At step 306, the virtual controller issues a flow table to a conventional BRAS or virtual BRAS. For example, according to the resource scheduling policy, when a virtual BRAS is selected, the virtual controller issues a flow table to the virtual BRAS, the flow table including at least one of the following information: a MAC address of a broadband access user, an IP address, a Session ID, authorization information, an ACL, multicast, QoS, and a user ID.

At step 307, the conventional BRAS or the virtual BRAS forwards a user data message according to the flow table. For example, the OLT, the aggregation switch, the OFLS or the OFS forwards a user data message to the virtual BRAS according to the flow table, the virtual BRAS performs ACL, speed limiting, replication, and forwarding processing on the user data message according to the flow table indication.

### Second scenario

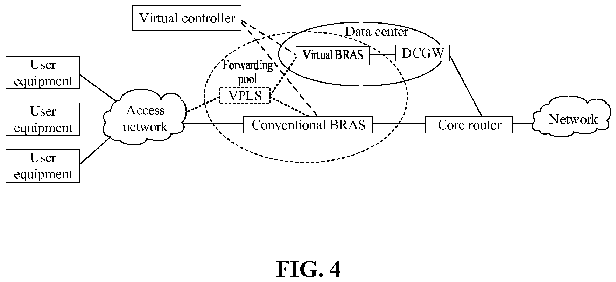

FIG. 4 is a schematic diagram of a second composition structure of a scheduling system according to an embodiment of the invention. As illustrated in FIG. 4, in the present implementation manner, a hardware module part includes a general-purpose server and a BRAS. The controller in the scheduling system according to the embodiments of the invention may be implemented by starting virtual controller software in the general-purpose server. The virtual forwarder in the scheduling system according to the embodiments of the invention may be implemented by starting virtual forwarder software in the general-purpose server such as a virtual BRAS. After building the network structure illustrated in FIG. 4, the virtual controller and virtual forwarder software may be started on the general-purpose server, and the virtual forwarder is deployed in a data center. In the present embodiment, a Virtual Private LAN Service, called VPLS, is configured as an access device on a conventional BRAS, and user data may be accessed to the conventional BRAS through the VPLS. In the present embodiment, a VPLS is configured on a Data Center GateWay, called DCGW, and user data may be connected to a virtual BRAS through the VPLS. The VPLS of the conventional BRAS and the VPLS of the DCGW are configured to be interconnected by pseudo wires, called PWs. After this configuration, a broadband access user can access both the conventional BRAS and the virtual BRAS through the VPLS equivalently. The conventional BRAS, the virtual BRAS and the virtual controller are further configured to establish an OpenFlow connection.

Based on the composition structure of the above scheduling system, the scheduling method according to the embodiments of the invention may include the following operations.

At step 401, the VPLS receives an access protocol message, a first protocol message is broadcast to the conventional BRAS and the virtual BRAS, and the first protocol message is sent to the virtual controller by the conventional BRAS and the virtual BRAS through a Packet In message defined by an OpenFlow protocol.

At step 402, the virtual controller receives the access protocol message, selects the protocol message sent by the conventional BRAS or the virtual BRAS, enters a protocol processing flow, and performs protocol message interaction with a broadband access user through a Packet_Out message defined by the OpenFlow protocol. The virtual controller carries information according to the interacted protocol message, the information carried by the protocol message including at least one of the following information: a MAC address, a user name, a domain name, etc. After the broadband access user is authenticated, authorization information of the broadband access user is obtained after authentication is passed.

At step 403, the virtual controller searches for a resource scheduling policy configured on the virtual controller according to the authorization information of the user, including at least one of the following information: an IP address, a user name, a domain name, an HQoS, an ACL, and a speed limit bandwidth. The resource scheduling policy inludes, for example, a user with a user name (admin) and a domain name (domain), and accessing from a virtual BRAS. The virtual controller selects a forwarder resource in a forwarding pool according to the matched resource scheduling policy, for example, selects a virtual BRAS pointed to in the resource scheduling policy.

At step 404, the virtual controller issues a flow table to a conventional BRAS or virtual BRAS. For example, according to the resource scheduling policy, when a virtual BRAS is selected, the virtual controller issues a flow table to the virtual BRAS, the flow table including at least one of the following information: a MAC address of a broadband access user, IP information, a Session ID, authorization information, an ACL, multicast, QoS, and a user ID.

At step 405, the virtual controller sends a free ARP message through the Packet_Out message defined by the OpenFlow protocol. For example, an IP address and destination IP address of a sender of the free ARP message are both user IP addresses. A message source MAC address is a local MAC address, and a message destination MAC address is a broadcast address.

At step 406, the conventional BRAS or the virtual BRAS forwards a user data message according to the flow table. For example, the VPLS forwards the user data message to the virtual BRAS according to the destination MAC address of the user data message. The virtual BRAS performs ACL, speed limiting, replication, and forwarding processing on the user data message according to the flow table indication.

### Third scenario

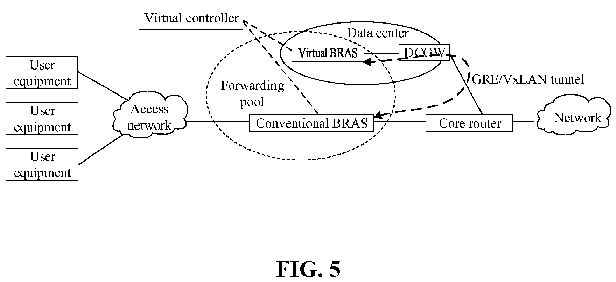

FIG. 5 is a schematic diagram of a third composition structure of a scheduling system according to an embodiment of the invention. As illustrated in FIG. 5, in the present implementation manner, a hardware module part includes a general-purpose server and a BRAS. The controller in the scheduling system according to the embodiments of the invention may be implemented by starting virtual controller software in the general-purpose server. The virtual forwarder in the scheduling system according to the embodiments of the invention may be implemented by starting virtual forwarder software in the general-purpose server such as a virtual BRAS. After building the network structure illustrated in FIG. 4, the virtual controller and virtual forwarder software may be started on the general-purpose server, and the virtual forwarder is deployed in a data center. In the present embodiment, a conventional BRAS and a virtual BRAS are configured to be connected through a Generic Routing Encapsulation, called GRE, or a Virtual extensible LAN, called VxLAN, tunnel. In the present embodiment, the conventional BRAS, the virtual BRAS and the virtual controller are further configured to establish an OpenFlow connection.

Based on the composition structure of the above scheduling system, the scheduling method according to the embodiments of the invention may include the following operations.

At step 501, the conventional BRAS receives an access protocol message and sends the access protocol message to the virtual controller through a Packet_In message defined by an OpenFlow protocol.

At step 502, the virtual controller receives the access protocol message, enters a protocol processing flow, and performs protocol message interaction with a broadband access user through a Packet_Out message defined by the OpenFlow protocol. The virtual controller carries information according to the interacted protocol message, the information carried by the protocol message including at least one of the following information: a MAC address, a user name, a domain name, etc. After the broadband access user is authenticated, authorization information of the broadband access user is obtained after authentication is passed.

At step 503, the virtual controller searches for a resource scheduling policy configured on the virtual controller according to the authorization information of the user, including at least one of the following information: an IP address, a user name, a domain name, an HQoS, an ACL, and a speed limit bandwidth. The resource scheduling policy includes, for example, a user with a user name (admin) and a domain name (domain), and accessing from a virtual BRAS. The virtual controller selects a forwarder resource in a forwarding pool according to the matched resource scheduling policy, for example, selects a virtual BRAS pointed to in the resource scheduling policy.

At step 504, the virtual controller issues a flow table 1 to the conventional BRAS, the flow table 1 defining an output port of a data message of a user, and the flow table 1 including at least one of the following information: field information such as a MAC address of the user, a session ID, an Ethernet type, an IP protocol number, a PPP protocol domain, and an output port. The conventional BRAS determines whether the user data message is continuously processed by the conventional BRAS or forwarded to the virtual BRAS through a GRE/VxLAN tunnel according to the flow table 1.

At step 505, the virtual controller issues a flow table 2 to the conventional BRAS or the virtual BRAS. For example, according to the resource scheduling policy, the virtual BRAS is selected, and a flow table 2 is issued to the virtual BRAS, the flow table 2 including at least one of the following information: a MAC address of a broadband access user, IP information, a Session ID, authorization information, an ACL, multicast, QoS, and a user ID.

At step 506, the conventional BRAS or the virtual BRAS forwards a user data message according to the flow table 2. After the flow table 1 is searched on the conventional BRAS, when there is no match, the flow table 2 is continuously searched. The conventional BRAS performs ACL, speed limiting, replication, and forwarding processing on the user data message according to information defined by matching items in the flow table 2. When the matching is achieved in the flow table 1, the user data message is forwarded to the virtual BRAS through the GRE/VxLAN tunnel, and the virtual BRAS forwards the user data message according to the flow table 2.

### Fourth scenario

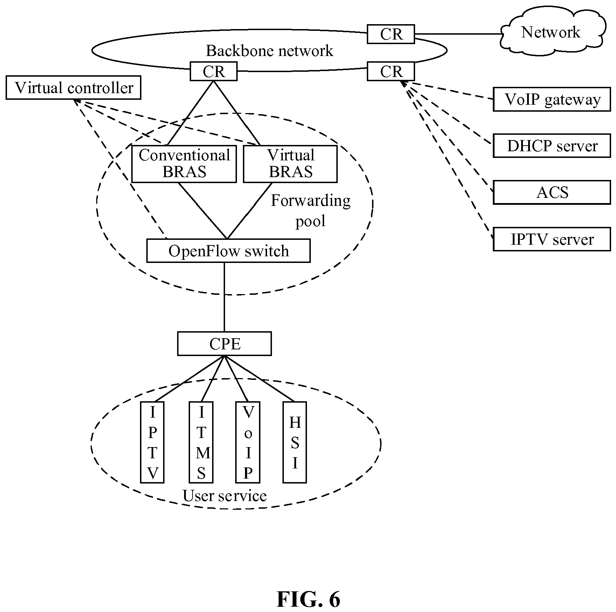

FIG. 6 is a schematic diagram of a fourth composition structure of a scheduling system according to an embodiment of the invention. As illustrated in FIG. 6, in the present implementation manner, a hardware module part includes a general-purpose server, a BRAS and an OpenFlow switch. The controller in the scheduling system according to the embodiments of the invention may be implemented by starting virtual controller software in the general-purpose server. The virtual forwarder in the scheduling system according to the embodiments of the invention may be implemented by starting virtual forwarder software in the general-purpose server such as a virtual BRAS.

In a typical home user application scenario, as illustrated in FIG. 6, a user service includes services such as VoIP, IPTV, and HSI, and may also include an Integrated Terminal Management System, called ITMS, service in which an operator automatically configures and manages a CPE. The existing solution is that a conventional BRAS device accesses and manages all sessions of a home user. The conventional BRAS device has limited session resources. The typical case is that the maximum is 64k sessions, each home user occupies 4 sessions, and 16K home users are supported to access maximally.

In fact, the VoIP service and the ITMS service of each home user are not highly required for network communication, the occupied bandwidth is low, generally tens of Kbps, and the bandwidth occupied by the HSI service and the IPTV service is high, and may reach 100 Mbps or even higher. When the VoIP service and the ITMS service are not processed on the conventional BRAS device, 50% of the session resources can be saved, and the conventional BRAS device can be connected to more home users.

Generally, the CPE distinguishes between HSI, IPTV, VoIP and ITMS services by a VLAN ID. The following operations are used to specify a case to describe the process. For example, a VLAN ID corresponding to the HSI service is 10, and a user name is user1@HSI; a VLAN ID corresponding to the IPTV service is 20, and a user name is user1@IPTV; a VLAN ID corresponding to the VoIP service is 30, and a user name is user1@VoIP; and a VLAN ID corresponding to the ITMS service is 40, and a user name is user1@ITMS.

Based on the composition structure of the above scheduling system, the scheduling method according to the embodiments of the invention may specifically describe the VoIP service, the IPTV service, the HSI service, and the ITMS service.

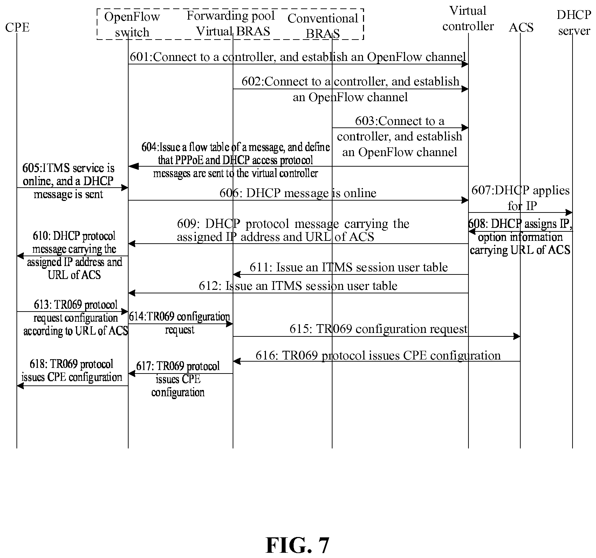

FIG. 7 is a schematic flowchart of a first scheduling method of a scheduling system based on a fourth composition structure according to an embodiment of the invention. The present implementation manner specifically describes the scheduling method for an ITMS service. The scheduling method of the present implementation manner includes the following operations by setting an IP address of a virtual controller as 192.168.1.2 and a port number as 6653.

At step 601, an OpenFlow switch is configured to be connected to a virtual controller. An OpenFlow protocol is started on the OpenFlow switch, the OpenFlow switch is configured to be connected to the virtual controller having an IP address 192.168.1.2 and a port 6653, and an OpenFlow channel is established.

At step 602, a virtual BRAS is configured to be connected to the virtual controller. An OpenFlow protocol is started on the virtual BRAS, the virtual BRAS is configured to be connected to the virtual controller having an IP address 192.168.1.2 and a port 6653, and an OpenFlow channel is established.

At step 603, a conventional BRAS is configured to be connected to the virtual controller. An OpenFlow protocol is started on the conventional BRAS, the conventional BRAS is configured to be connected to the virtual controller having an IP address 192.168.1.2 and a port 6653, and an OpenFlow channel is established.

At step 604, the virtual controller issues a flow table to the OpenFlow switch, and a PPPoE access protocol message and a DHCP access protocol message are defined and sent to the virtual controller. The specific definition is as follows: an Ethernet type, a PPP protocol number, an IP protocol number, a User Datagram Protocol, called UDP, port number and ACTION are issued by using a standard Match domain and a customized Match domain in an OpenFlow standard protocol. For the DHCP access protocol message, an Ethernet type (e.g., 0x0800, indicating an IP message), a PPP protocol number (e.g., 0), an IP protocol number (e.g., 17, indicating a UDP), a UDP port number (e.g., 67, indicating a DHCP server port number) and ACTION (e.g., defined as Output CONTROLLER) are issued. For the PPPoE access protocol message, an Ethernet type (e.g., 0x8863 and 0x8864, indicating a PPPoE message), a PPP protocol number (e.g., 0xC021 (LCP), 0xC023 (PAP), 0xC223 (CHAP), and 0x8021 (IPCP)), an IP protocol number (e.g., 0), a UDP port number (e.g., 0) and ACTION (e.g., defined as Output CONTROLLER) are issued.

At step 605, a CPE is started to actively request an Auto-Configuration Server, called ACS, for configuration, and applies for an IP address through a DHCP protocol. An Option 60 option of a DHCP protocol message contains a user name user1@ITMS, a VLAN ID carried in an Ethernet frame of the DHCP protocol message is 40, and the DHCP protocol message is sent to the OpenFlow switch.

At step 606, the OpenFlow switch parses the received DHCP protocol message and finds that the Ethernet type of the message is 0x0800, there is no PPP protocol number, the IP protocol number is 17, and the UDP port number is 67. According to ACTION, the DHCP protocol message is encapsulated through a Packet_In message defined in the OpenFlow standard and sent to the virtual controller.

At step 607, the virtual controller receives the DHCP protocol message and records a MAC address of a user. For example, the MAC address of the user is: 00-01-fa-ab-04-0e. According to the VLAN ID value of 40 carried in the DHCP message and the user name user1@ITMS in an Option60 field, the user is authenticated and authorized. As an example, the authorization information includes a Committed Information Rate, called CIR, of 100 kbps and a Committed Burst Size, called CBS, of 1500 bytes. The authorization information is forwarded to a DHCP server to request an IP address to be assigned.

At step 608, the DHCP server receives the IP address request. For example, the assigned IP address is 192.168.1.3, and Option 43 option information is added to a response message. The option information includes an ACS Uniform Resource Locator, called URL, for example, the URL is http://192.168.8.8:8080/acs.

At step 609, the virtual controller forwards the DHCP protocol message carrying the assigned IP address and the URL of the ACS to the CPE, and forwards the message through the OpenFlow switch during the forwarding process.

At step 610, the OpenFlow switch forwards the DHCP protocol message carrying the assigned IP address and the URL of the ACS to the CPE.

At step 611, a resource scheduling policy Policy1 pre-configured by the virtual controller defines that, for a user service with a VLAN ID of 40, a user name user1 of @ITMS and a CIR less than 1 Mbps, a flow table is issued to the virtual BRAS. Because the authorized CIR of an ITMS service is 100 Kbps, which is less than 1 Mbps, the virtual controller issues an ITMS session user table to the virtual BRAS according to the pre-configured resource scheduling policy Policy1. The ITMS session user table containing information such as the MAC address of the user, the VLAN ID, the IP address and the CIR is issued to the virtual BRAS through a manufacturer extension field defined in the OpenFlow standard. The virtual BRAS forwards ITMS service traffic according to the ITMS session user table.

At step 612, the virtual controller issues an ITMS session distribution table to the OpenFlow switch. The virtual controller may issue an ITMS session distribution table to the OpenFlow switch through Action and Match item of a flow table defined in the OpenFlow standard protocol. The OpenFlow switch distributes the ITMS service traffic to the virtual BRAS device according to the ITMS session distribution table for speed limit and forwarding. For example, the table information of the issued ITMS session distribution table includes: a source MAC address that is a MAC address of a user (e.g., 00-01-fa-ab-04-0e), a VLAN ID (e.g., 40), an Ethernet type (e.g., 0x0800, indicating an IP message) and a source IP address (e.g., 192.168.1.3). Action is defined as an output designated port, which is a port where the OpenFlow switch is connected to the virtual BRAS.

At step 613, after obtaining the assigned IP address and the URL of the ACS, the CPE sends a configuration request to the ACS through a TR069 protocol (referred to as a CPE wide area network management protocol, which is a technical specification developed by the DSL Forum). The TR069 configuration request message passes through the OpenFlow switch.

At step 614, the OpenFlow switch searches for the matched flow table according to the source MAC address, the VLAN ID, the Ethernet type and the source IP address in the TR069 configuration request message, and forwards the TR069 configuration request message to the virtual BRAS according to the definition in the Action.

At step 615, the virtual BRAS receives the TR069 configuration request message forwarded by the OpenFlow switch, extracts the source MAC address, the VLAN ID and the source IP address in the TR069 configuration request message, searches the ITMS session user table, obtains CIR information, and performs speed limit on the occupied bandwidth of the user according to the CIR information. Further, the TR069 configuration request message is forwarded to the ACS.

At step 616, after receiving the TR069 configuration request message, the ACS replies to CPE configuration information by using a TR069 configuration information response message, and the TR069 configuration information response message passes through the virtual BRAS.

At step 617, the virtual BRAS searches for user routing information and forwards the TR069 configuration information response message to the OpenFlow switch.

At step 618, the OpenFlow switch forwards the TR069 configuration information response message to the CPE. The CPE configures its working parameters based on the configuration information and starts normal operation.

After the CPE is properly configured, the home user can access the Internet normally.

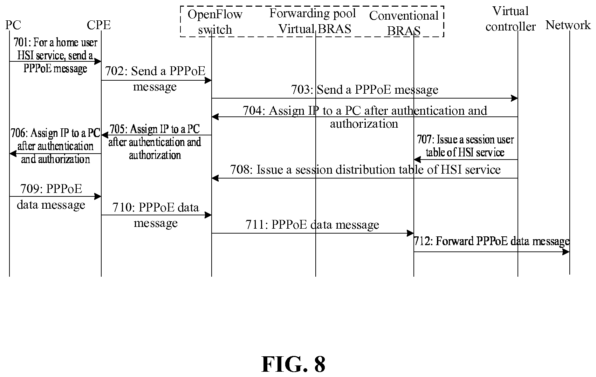

FIG. 8 is a schematic flowchart of a second scheduling method of a scheduling system based on a fourth architecture according to an embodiment of the invention. The present implementation manner specifically describes the scheduling method for an HSI service. The scheduling method specifically includes the following operations.

At step 701, a PC of a home user starts to dial up for accessing the Internet by usually using a PPPoE. A PPPoE access protocol message passes through a CPE. The access protocol message carries a user name of user1@HSI.

At step 702, the CPE adds a VLAN identifier to the PPPoE access protocol message, and forwards the PPPoE access protocol message added with the VLAN identifier to the OpenFlow switch. The VLAN identifier is, for example, a VLAN ID value of 10.

At step 703, after receiving the PPPoE access protocol message, the OpenFlow switch sends the PPPoE access protocol message to the virtual controller according to the definition of a flow table.

At step 704, the virtual controller receives the PPPoE protocol message and records a MAC address of a user. For example, the MAC address of the user is 00-02-fa-ab-04-0e. According to the VLAN ID value of 10 carried in the PPPoE access protocol message and the user name of user1@HSI carried in the message, the virtual controller authenticates and authorizes a user. As an example, the authorization information may include: a CIR of 100 Mbps and a CBS of 2048 bytes; and an IP address assigned to the user, for example, an IP address of 192.168.1.4. The virtual controller sends the PPPoE message carrying the assigned IP address to the PC, and THE PPPoE message is forwarded through the OpenFlow switch midway.

At step 705, the OpenFlow switch forwards the PPPoE message carrying the assigned IP address to the PC, and the the PPPoE message is forwarded through the CPE midway.

At step 706, the CPE forwards the PPPoE message carrying the assigned IP address to the PC.

At step 707, according to a pre-configured resource scheduling policy Policy 2, the virtual controller defines that, for a user service with a VLAN ID of 10, a user name user1 of @HSI and a CIR greater than 1 Mbps, an item is issued to a conventional BRAS. Because the authorized CIR of the HSI service is 100 Mbps, which is greater than 1 Mbps, the virtual controller issues a session user table of the HSI service to the conventional BRAS. The session user table of the HSI service containing information such as an MAC address of the user, a VLAN ID, an IP address and a CIR is issued to the conventional BRAS through a vendor extension field defined in the OpenFlow standard. The conventional BRAS forwards the HSI service traffic according to the session user table of the HSI service.

At step 708, the virtual controller issues a session distribution table of an HSI service to the OpenFlow switch. The virtual controller issues the session distribution table of the HSI service to the OpenFlow switch through Action and Match item of a flow table defined in the OpenFlow standard protocol. The OpenFlow switch distributes the HSI service traffic to the conventional BRAS device according to the session distribution table of the HSI service for speed limit and forwarding. For example, the table information of the issued the session distribution table of the HSI service includes: a source MAC address being a MAC address of a user (e.g., 00-02-fa-ab-04-0f), a VLAN ID (e.g., 10), an Ethernet type (e.g., 0x8864, indicating an IP message), a PPPoE session ID (e.g., 0x0008), a PPP protocol number (e.g., 0x0021), and a source IP address (e.g., 192.168.1.4). Action is defined as an output designated port, which is a port where the OpenFlow switch connected to the conventional BRAS.

At step 709, after obtaining the assigned IP address, the PC can access the network normally. The PPPoE data message for accessing the network passes through the CPE.

At step 710, the CPE adds a VLAN identifier to a PPPoE data message of a user accessing a network, where the VLAN identifier is, for example, a VLAN ID of 10, and the CPE forwards the PPPoE data message added with the VLAN identifier to the OpenFlow switch.

At step 711, the OpenFlow switch searches for the matched flow table according to a source MAC address, a VLAN ID, an Ethernet type, a PPPoE session ID, a PPP protocol number, and a source IP address in the PPPoE data message, and forwards the PPPoE data message to the conventional BRAS according to the definition in Action.

At step 712, the conventional BRAS receives the PPPoE data message forwarded by the OpenFlow switch, extracts the source MAC address, the PPPoE session ID, the VLAN ID and the source IP address in the PPPoE data message, searches a session user table of the HIS service, obtains CIR information, and performs speed limit on the occupied bandwidth of the user according to the CIR information. Further, the PPPoE data message is forwarded to the network.

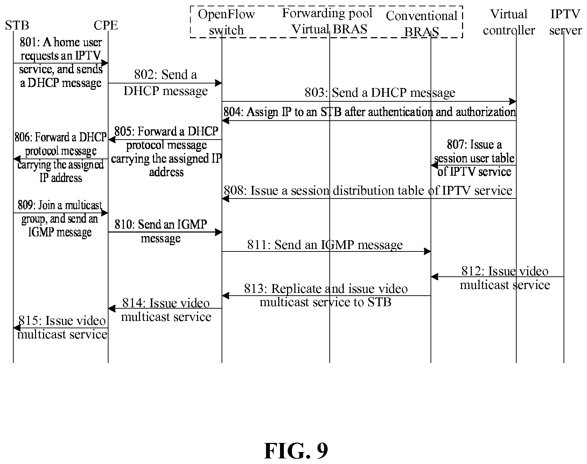

FIG. 9 is a schematic flowchart of a third scheduling method of a scheduling system based on a fourth architecture according to an embodiment of the invention. The present implementation manner specifically describes the scheduling method for an IPTV service. After a CPE is properly configured, a home user can access a video service normally. An STB applies for an IP address and access authentication through a DHCP protocol. A virtual controller authenticates and authorizes a user according to a VLAN ID value of 20 carried in a DHCP message and a user name of user1@IPTV in an Option60 field. According to authorization information and a pre-configured resource scheduling policy, a session user table of an IPTV service is issued to the conventional BRAS, and a session forwarding table of an IPTV service is issued to an OpenFlow switch to distribute an IPTV service message to the conventional BRAS. The method may specifically include the following operations as illustrated in FIG. 9.

At step 801, an STB of a home user starts to request an IPTV service and applies for an IP address through DHCP. Option 60 of a DHCP protocol message contains a user name of user1@IPTV, and the DHCP protocol message is sent to a CPE.

At step 802, a CPE adds a VLAN identifier to the DHCP protocol message, where the VLAN identifier is, for example, a VLAN ID of 20, and the CPE forwards the DHCP protocol message added with the VLAN identifier to an OpenFlow switch.

At step 803, after receiving the DHCP protocol message, the OpenFlow switch sends the DHCP protocol message to a virtual controller according to the definition of a flow table.

At step 804, the virtual controller receives the DHCP protocol message and records a MAC address of a user. For example, the MAC address of the user is 00-02-fa-ab-04-0f. According to the VLAN ID value of 20 carried in the DHCP protocol message and the user name of user1@IPTV carried in the DHCP protocol message, the virtual controller authenticates and authorizes the user. As an example, the authorization information may include: a CIR of 100 Mbps and a CBS of 2048 bytes; and an IP address assigned to the user, for example, an IP address of 192.168.1.4. The virtual controller sends the DHCP protocol message carrying the assigned IP address to the STB, and the DHCP protocol message is forwarded through the OpenFlow switch and the CPE midway.

At step 805, the OpenFlow switch forwards the DHCP protocol message carrying the assigned IP address to the STB, and the DHCP protocol message is forwarded through the CPE midway.

At step 806, the CPE forwards the DHCP protocol message carrying the assigned IP address to the STB.

At step 807, according to a pre-configured resource scheduling policy Policy3, the virtual controller defines that, for a user service with a VLAN ID of 20, a user name of user1@IPTV, a CIR greater than 1 Mbps, an item is issued to a conventional BRAS. Because the authorized CIR of the IPTV service is 100 Mbps, which is greater than 1 Mbps, the virtual controller issues a session user table of an IPTV service to the conventional BRAS. The session user table of the IPTV containing information such as an MAC address of the user, a VLAN ID, an IP address and a CIR is issued to the conventional BRAS through a vendor extension field defined in the OpenFlow standard. The conventional BRAS forwards the IPTV service traffic according to the session user table of the IPTV service.

At step 808, the virtual controller issues a session distribution table of an IPTV service to the OpenFlow switch. The virtual controller issues the session distribution table of the IPTV service to the OpenFlow switch through Action and Match item of a flow table defined in the OpenFlow standard protocol. The OpenFlow switch distributes the IPTV service traffic to the conventional BRAS according to the session distribution table of the IPTV service for speed limit and forwarding.

At step 809, after obtaining the assigned IP address, the STB requests to join a multicast group and requests the conventional BRAS for a multicast service by sending an IGMP message. The IGMP message passes through the CPC and the OpenFlow switch.

At step 810, the CPE adds a VLAN identifier to the IGMP message, where the VLAN identifier is, for example, a VLAN ID value of 20, and the CPE forwards the IGMP message added with the VLAN identifier to the OpenFlow switch.

At step 811, the OpenFlow switch finds the matched flow table according to the IGMP message and forwards the IGMP message to the conventional BRAS.

At step 812, an IPTV server issues a video multicast service to the conventional BRAS.

At step 813, the conventional BRAS receives the video multicast service, replicates the video multicast service, and issues the video multicast service to the STB through the OpenFlow switch and the CPE.

At step 814, the OpenFlow switch issues the video multicast service to the CPE.

At step 815, the CPE issues the video multicast service to the STB.

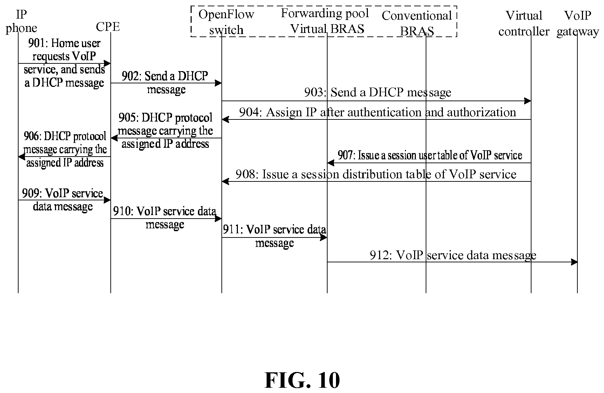

FIG. 10 is a schematic flowchart of a third scheduling method of a scheduling system based on a fourth architecture according to an embodiment of the invention. The present implementation manner specifically describes the scheduling method for a VoIP service. After a CPE is properly configured, a home user can perform VoIP communication normally. An IP phone applies for an IP address and access authentication through a DHCP protocol. A virtual controller authenticates and authorizes a user according to a VLAN ID value of 30 carried in a DHCP message and a user name of user1@VoIP in an Option60 field. According to authorization information and a pre-configured resource scheduling policy, a VoIP service session user table is issued to a virtual BRAS, and a session forwarding table of a VoIP service is issued to an OpenFlow switch to distribute a VoIP service message to the virtual BRAS. As illustrated in FIG. 10, the method specifically includes the operations as follows.

At step 901, an IP phone of a home user requests a VoIP service and applies for an IP address through a DHCP protocol. Option60 of a DHCP protocol message contains a user name of user1@VoIP, and the DHCP protocol message is sent to a CPE.

At step 902, a CPE adds a VLAN identifier to the DHCP protocol message, where the VLAN identifier is, for example, a VLAN ID value of 30, and the CPE forwards the DHCP protocol message added with the VLAN identifier to an OpenFlow switch.

At step 903, after receiving the DHCP protocol message, the OpenFlow switch sends the DHCP protocol message to a virtual controller according to the definition of a flow table.

At step 904, the virtual controller receives the DHCP protocol message and records a MAC address of a user. For example, the MAC address of the user is: 00-02-fa-ab-04-0f. According to the VLAN ID value of 30 carried in the PPPoE access protocol message and the user name of user1@VoIP carried in the message, the virtual controller authenticates and authorizes the user. As an example, the authorization information may include: a CIR of 100 kbps and a CBS of 1500 bytes; and an IP address assigned to the user, for example, an IP address of 192.168.1.4. The virtual controller sends the DHCP message carrying the assigned IP address to the IP phone, and the DHCP message is forwarded through the OpenFlow switch and the CPE midway.

At step 905, the OpenFlow switch forwards the DHCP message carrying the assigned IP address to the IP phone, and the DHCP message is forwarded through the CPE midway.

At step 906, the CPE forwards the DHCP message carrying the assigned IP address to the IP phone.

At step 907, according to a pre-configured resource scheduling policy Policy4, the virtual controller defines that, for a user service with a VLAN ID of 30, a user name of user1@VoIP, a CIR less than 1 Mbps, an item is issued to a virtual BRAS. Because the authorized CIR of the VoIP service is 100 kbps, which is less than 1 Mbps, the virtual controller issues a session user table of a VoIP service to the virtual BRAS. The session user table of the VoIP service containing information such as a MAC address of the user, a VLAN ID, an IP address and a CIR is issued to the virtual BRAS through a vendor extension field defined in the OpenFlow standard. The virtual BRAS forwards VoIP service traffic according to the session user table of the VoIP service.

At step 908, the virtual controller issues a session distribution table of a VoIP service to the OpenFlow switch. The virtual controller issues the session distribution table of the VoIP service to the OpenFlow switch through Action and Match item of a flow table defined in the OpenFlow standard protocol. The OpenFlow switch distributes the VoIP service traffic to the virtual BRAS device according to the session distribution table of the VoIP service for speed limit and forwarding.

At step 909, after obtaining the assigned IP address, the IP phone can perform VoIP service normally. The VoIP service data message passes through the CPE.

At step 910, the CPE adds a VLAN identifier to the VoIP service data message, where the VLAN identifier is, for example, a VLAN ID value of 30, and the CPE forwards the VoIP service data message added with the VLAN identifier to the OpenFlow switch.

At step 911, the OpenFlow switch finds the matched flow table according to the VoIP service data message and forwards the VoIP service data message to the virtual BRAS.

At step 912, the virtual BRAS receives the VoIP service data message forwarded by the OpenFlow switch, searches the session user table of the VoIP service, obtains CIR information, and performs speed limit on the occupied bandwidth of the user according to the CIR information. Further, the VoIP service data message is forwarded to a VoIP gateway.

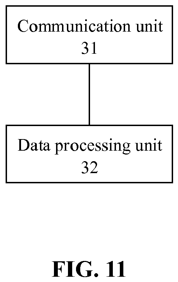

The embodiments of the invention also provide a controller. FIG. 11 is a schematic diagram of a composition structure of a controller according to an embodiment of the invention. As illustrated in FIG. 11, the controller includes a communication unit 31 and a data processing unit 32.

The communication unit 31 is configured to receive an access protocol message of a user equipment.

The data processing unit 32 is configured to authenticate the user equipment, and obtain authorization information of the user equipment after authentication is passed, and also configured to select a first forwarder as an access device of the user equipment according to the authorization information of the user equipment, where the first forwarder is the pre-configured physical forwarder or virtual forwarder, and the first forwarder is configured to forward a data message.

As an implementation manner, the communication unit 31 is configured to, based on that a physical forwarder or a virtual forwarder receives an access protocol message of the user equipment, receive the access protocol message of the user equipment sent by the physical forwarder or the virtual forwarder, and authenticate the user equipment according to the access protocol message.

As an implementation manner, the communication unit 31 is further configured to issue a flow table to the first forwarder to control a forwarding behavior of the first forwarder.

It should be understood by those skilled in the art that the functions of the processing units of the controller according to the embodiment of the invention can be understood by referring to the related description of the foregoing scheduling method. The processing units of the controller according to the embodiment of the invention can be implemented by an analog circuit implementing the function described in the embodiment of the invention, and can also be implemented by running software for performing the function described in the embodiment of the invention on a smart terminal.

In the embodiment of the present invention, when the controller is implemented by virtual controller software started in a general-purpose server, the data processing unit 32 of the controller may be implemented by a CPU, a Digital Signal Processor, called DSP, or a Field-Programmable Gate Array, called FPGA, in the general-purpose server for running the controller software in an actual application. The communication unit 31 of the controller may be implemented by a communication interface in the general-purpose server running the controller software in conjunction with a transmission antenna in an actual application.

It should be noted that, when the controller provided by the foregoing embodiment performs scheduling processing, only the division of each of the foregoing program modules is illustrated. In actual applications, the above processing may be allocated to be performed by different program modules as needed. The internal structure of the controller is divided into different program modules to perform all or part of the processing described above. In addition, the controller provided in the foregoing embodiment and the scheduling method embodiment belong to the same concept, the specific implementation process is described in detail in the method embodiment, and details are not described herein.

The embodiments of the present invention also provide a controller, which includes a memory, a processor and a computer program that is stored on the memory and runnable on the processor. The processor is configured to implement the following operations when executing the program. A user equipment is authenticated according to a received access protocol message of the user equipment, and authorization information of the user equipment is obtained after authentication is passed; and a first forwarder is selected as an access device of the user equipment according to the authorization information of the user equipment, where the first forwarder is a pre-configured physical forwarder or virtual forwarder, and the first forwarder is used for forwarding a data message.

In one embodiment, the processor is configured to implement the following operations when executing the program. Based on that a physical forwarder or a virtual forwarder receives an access protocol message of the user equipment, the access protocol message of the user equipment sent by the physical forwarder or the virtual forwarder is received, and the user equipment is authenticated according to the access protocol message.

In one embodiment, the processor is configured to implement the following operation when executing the program. A flow table is issued to the first forwarder to control a forwarding behavior of the first forwarder.

It is to be understood that the memory may be a volatile memory or a non-volatile memory, or may include both a volatile memory and a non-volatile memory. The non-volatile memory may be a Read Only Memory, called ROM, a Programmable Read-Only Memory, called PROM, an Erasable Programmable Read-Only Memory, called EPROM, an Electrically Erasable Programmable Read-Only Memory, called EEPROM, a Ferromagnetic Random Access Memory, called FRAM, a flash memory, a magnetic surface memory, an optical disk or a Compact Disc Read-Only Memory, called CD-ROM; and the magnetic surface memory may be a disk memory or a tape memory. The volatile memory may be a Random Access Memory, called RAM, that acts as an external cache. By way of example and not limitation, many forms of RAM are available, such as a Static Random Access Memory, called SRAM, a Synchronous Static Random Access Memory, called SSRAM, a Dynamic Random Access Memory, called DRAM, a Synchronous Static Random Access Memory, called SDRAM, a Double Data Rate Synchronous Dynamic Random Access Memory, called DDRSDRAM, an Enhanced Synchronous Dynamic Random Access Memory, called ESDRAM, a Synchlink Dynamic Random Access Memory, called SLDRAM, and a Direct Rambus Random Access Memory, called DRRAM. The memories described in the embodiment of the invention are intended to include, but not limited to these and any other suitable types of memories.

The method disclosed in the foregoing embodiments of the invention may be applied to a processor or implemented by a processor. The processor may be an integrated circuit chip with signal processing capability. In the implementation process, each operation of the above method may be completed by an integrated logic circuit of hardware in the processor or an instruction in the form of software. The above processor may be a general-purpose processor, a DSP, or other programmable logic devices, discrete gate or transistor logic devices, discrete hardware components, or the like. The methods, operations, and logical block diagrams disclosed in the embodiments of the invention may be implemented or performed by the processor. The general-purpose processor may be a microprocessor, or any conventional processor. The operations of the method disclosed in combination with the embodiments of the invention may be directly implemented as being completely performed by a hardware decoding processor, or completely performed by a combination of hardware and software modules in the decoding processor. A software module may be located in a storage medium. The storage medium is located in the memory, and the processor reads information in the memory and completes the operations of the foregoing method in combination with hardware thereof.

In an exemplary embodiment, the embodiments of the present invention further provide a computer storage medium, where the computer storage medium stores a computer executable instruction. The computer executable instruction is used to perform the following operations. A user equipment is authenticated according to a received access protocol message of the user equipment, and authorization information of the user equipment is obtained after authentication is passed; and a first forwarder is selected as an access device of the user equipment according to the authorization information of the user equipment, where the first forwarder is a pre-configured physical forwarder or virtual forwarder, and the first forwarder is used for forwarding a data message.

In one embodiment, the computer executable instruction is used to perform the following operations. Based on that a physical forwarder or a virtual forwarder receives an access protocol message of the user equipment, the access protocol message of the user equipment sent by the physical forwarder or the virtual forwarder is received, and the user equipment is authenticated according to the access protocol message.

In one embodiment, the computer executable instruction is used to perform the following operation. A flow table is issued to the first forwarder to control a forwarding behavior of the first forwarder.

Those skilled in the art should understand that the embodiments of the present invention may be provided as a method, a system or a computer program product. Thus, forms of hardware embodiments, software embodiments or embodiments integrating software and hardware may be adopted in the present invention. Moreover, the invention may adopt the form of a computer program product implemented on one or more computer available storage media (including, but not limited to a disk memory, an optical memory and the like) containing computer available program codes.

The present invention is described with reference to flowcharts and/or block diagrams of the method, the device (system) and the computer program product according to the embodiments of the invention. It is to be understood that each flow and/or step in the flowcharts and/or the block diagrams and a combination of the flows and/or the blocks in the flowcharts and/or the block diagrams may be implemented by computer program instructions. These computer program instructions may be provided for a general-purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific manner, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide an step of achieving the functions designated in one or more flows of the flowcharts and/or one or more blocks of the block diagrams.

The above is only the preferred embodiment of the present invention and is not intended to limit the scope of the present invention.

### INDUSTRIAL APPLICABILITY

By using the technical solution of the embodiments of the present invention, a physical forwarder and a virtual forwarder form a forwarding pool by providing a controller additionally, and resources of the forwarding pool are centrally managed and optimized for scheduling, thereby improving the capability of a conventional forwarder to access user. In addition, the use of the virtual forwarder also reduces the access cost of broadband access users.

## Claims

1. A scheduling method, comprising:
authenticating, by a controller, a user equipment according to a received access protocol message of the user equipment, and obtaining authorization information of the user equipment after authentication is passed; and
selecting, by the controller, a first forwarder as an access device of the user equipment according to the authorization information of the user equipment, the first forwarder being a pre-configured physical forwarder or virtual forwarder, and the first forwarder being configured to forward a data message.

2. The method according to claim 1, wherein authenticating, by the controller, the user equipment according to the received access protocol message of the user equipment comprises:
in condition that a physical forwarder or a virtual forwarder receives an access protocol message of the user equipment, receiving, by the controller, the access protocol message of the user equipment forwarded by the physical forwarder or the virtual forwarder, and authenticating, by the controller, the user equipment according to the access protocol message.

3. The method according to claim 1 or 2, wherein the access protocol message comprises: a point to point protocol over Ethernet, PPPoE, message, a dynamic host configuration protocol, DHCP, message, an address resolution protocol, ARP, message, an Internet group management protocol, IGMP, message, an 802.1x protocol message, a message under a web authentication mode, or a neighbor discovery protocol, NDP, message.

4. The method according to claim 1, further comprising: issuing, by the controller, a flow table to the first forwarder to control a forwarding behavior of the first forwarder.

5. A scheduling system, comprising: a user equipment, a controller, a physical forwarder, and a virtual forwarder, wherein
the controller is configured to authenticate the user equipment according to a received access protocol message of the user equipment, obtain authorization information of the user equipment after authentication is passed, and select a first forwarder as an access device of the user equipment according to the authorization information of the user equipment, wherein the first forwarder is the pre-configured physical forwarder or virtual forwarder, and the first forwarder is configured to forward a data message.

6. The system according to claim 5, wherein the physical forwarder or the virtual forwarder is further configured to receive the access protocol message of the user equipment and send the access protocol message to the controller; and
the controller is configured to receive the access protocol message of the user equipment sent by the physical forwarder or the virtual forwarder, and authenticate the user equipment according to the access protocol message.

7. The system according to claim 5 or 6, wherein the access protocol message comprises: a point to point protocol over Ethernet, PPPoE, message, a dynamic host configuration protocol, DHCP, message, an address resolution protocol, ARP, message, an Internet group management protocol, IGMP, message, an 802.1x protocol message, a message under a web authentication mode, or a neighbor discovery protocol, NDP, message.

8. The system according to claim 5, wherein the user equipment comprises: a residential gateway, RG, a customer premise equipment, CPE, a personal computer, PC, a voice over Internet protocol, VoIP, an Internet protocol television, IPTV, a set top box, STB, or an integrated access device, IAD.

9. The system according to claim 5, wherein the physical forwarder comprises: a broadband remote access server, BRAS, a broadband network gateway, BNG, a broadband service gateway, BSG, a service router, SR, a broadband access server, BAS, an OpenFlow logical switch, OFLS, an OpenFlow switch, OFS, an access controller, AC, an optical line terminal, OLT, or an aggregation switch.

10. The system according to claim 5, wherein the controller is further configured to issue a flow table to the first forwarder to control a forwarding behavior of the first forwarder; and
the physical forwarder or virtual forwarder as the first forwarder is configured to access a data message of the user equipment based on the flow table.

11. A controller, comprising: a communication unit and a data processing unit, wherein
the communication unit is configured to receive an access protocol message of a user equipment; and
the data processing unit is configured to authenticate the user equipment, and obtain authorization information of the user equipment after authentication is passed, and further configured to select a first forwarder as an access device of the user equipment according to the authorization information of the user equipment, wherein the first forwarder is the pre-configured physical forwarder or virtual forwarder, and the first forwarder is configured to forward a data message.

12. The controller according to claim 11, wherein the communication unit is configured to, based on that a physical forwarder or a virtual forwarder receives an access protocol message of the user equipment, receive the access protocol message of the user equipment sent by the physical forwarder or the virtual forwarder, and authenticate the user equipment according to the access protocol message.

13. The controller according to claim 11, wherein the communication unit is further configured to issue a flow table to the first forwarder to control a forwarding behavior of the first forwarder.

14. A computer storage medium, having a computer executable instruction stored therein, the computer executable instruction being used to perform the scheduling method according to any one of claims 1 to 4.

15. A controller, comprising a memory, a processor and a computer program that is stored on the memory and runnable on the processor, wherein the processor implements the operations of the scheduling method according to any one of claims 1 to 4 when executing the program.
